# EUROPEAN PATENT SPECIFICATION

(11) **EP 0 329 792 B1**
(45) Date of publication and mention of the grant of the patent: **20.09.1995**
(21) Application number: 88906118.0
(22) Date of filing: 21.07.1988
(51) Int. Cl.: B29C 45/16, B29C 45/40, B29C 45/17

(54) **INJECTION MOLDING DEVICE AND INJECTION MOLDING METHOD FOR MANUFACTURING A FOIL DECORATED MOLDING**
SPRITZGIESSEINRICHTUNG UND VERFAHREN ZUR HERSTELLUNG EINES ARTIKELS MIT FOLIENDEKOR
APPAREIL DE MOULAGE PAR INJECTION ET PROCEDE DE MOULAGE PAR INJECTION POUR LA FABRICATION D'UN ARTICLE DECORE D'UNE FEUILLE

(30) Priority: 23.07.1987 JP 183889/87
(43) Date of publication of application: 30.08.1989
(73) Proprietor: NISSHA PRINTING CO., LTD., Nakagyo-ku Kyoto-shi Kyoto 604 (JP)
(72) Inventor: ITOH, Hisayuki, Kyoto 617 (JP); NAKAMURA, Yuzou, Mukou-shi Kyoto 617 (JP); HIGUCHI, Noriaki, Osaka 567 (JP); YAMASAKI, Seiichi, Kyoto 618 (JP)
(74) Representative: Glawe, Delfs, Moll & Partner
(86) International application number: PCT/JP88/00734
(87) International publication number: WO 89/00912

(56) References cited:
- JP-A-61 137 716
- JP-A-61 188 117
- JP-A-63 128 917
- JP-A-63 149 122
- US-A- 4 674 972

## Description

The present invention relates to an injection molding device for manufacturing a foil decorated molding formed by a transfer layer on the surface thereof and an injection molding method for manufacturing a foil decorated molding.

Conventionally, various kinds of methods for manufacturing a foil decorated molding which is molded by an injection molding process and formed with a transfer layer removed from a substrate film of a transfer foil on the surface of the molding after the transfer foil is inserted into cavities in an injection mold have been known in the art. Since, the use of the method requires an alignment of the transfer foil along a cavity-forming face of the mold therein, the transfer foil is preheated before the injection molding process to be easily aligned along the cavity-forming face of the mold in the case where the cavity-forming face thereof is greatly recessed or projected from a parting face of the mold.

As one example of the art according to the preambles of claims 1 and 2, an injection molding method shown in JP-A-58-132529 is constructed so that a heating means is entered into and removed from a space between a first half of a mold and a second half of the mold in mold opening to heat a transfer foil before an injection molding.

As another known example thereof, an injection molding device for manufacturing a foil decorated molding is constructed so that a heating means for heating a transfer foil is installed in means for transporting a transfer foil, the heating means heating the foil while it is entered into a space between a first half of a mold and a second half of the mold in mold opening.

However, there has been such a problem that in these devices, the technique for removing a molding from the mold has no special consideration. That is, any techniques described above only disclose that the preheated transfer foil is set to the space between the first half of the mold and the second half of the mold in mold opening, after mold clamping, molten resin is injected into cavities in the mold, and the mold is opened to remove the molding from the mold after the molding is cooled. In short, the molding removal operation is done separate from the transfer foil heating operation completely. Therefore, the conventional techniques have such a problem that the molding cycle becomes longer for an additional time when the molding removal operation is done separately from the heating operation, resulting in much lower productivity.

US-A-4 674 972 discloses a molding method in which a plastic sheet is heated and utilized in molds to form a molding. A heater assembly is provided which is movable into the space between two mold halves, and the molded article is hold in the upper mold half by vacuum means and released by this vacuum means and put on the heater assembly when it is in the space between the mold halves.

It is an object of the invention to provide an injection molding device and a method for manufacturing a foil decorated molding in which heating of the foil and removing the molded article from the mold can be performed in a short time.

This object is achieved by a device as defined in claim 1 and by a method as defined in claim 2, respectively.

In arrangement of the present invention, the long transfer foil having the transfer layer on the substrate film is transported into the space between the first and the second half molds each one pitch thereof in mold opening, the molten resin is injected into the cavities after mold clamping, the mold is opened after it is cooled, and the substrate film is removed from the molding temporarily attached to the cavity-forming face of the first half mold to obtain the foil decorated molding of which the transfer layer is transferred on the surface. In mold opening, the heating and removing means with the heating device and the removal device is guided into the space to hold the molding at the side of the first half mold and to heat the transfer foil at the side of the second half mold. In mold clamping, the means is moved outside the space to remove the molding held by the removal device therefrom.

Accordingly, the injection molding device and method for manufacturing a foil decorated molding of the present invention can obtain the following effects: That is, they are provided with the heating and removing means having the heating device and the molding removal device in which by use of a short time and the space in mold opening, the molding is held by the removal device and the transfer foil is heated by the heating device before removing the molding therefrom outside the space between the half molds in mold clamping, on the basis of operation of the means. Therefore, the molding removal operation and the transfer foil heating operation can be done at the same time, this results in improved productivity thereof, comparing with the conventional techniques in which both operations are separately done.

One embodiment of the present invention is shown by the following drawings.
Fig. 1 is a longitudinally sectional view for explaining a state where the transfer foil is transported between the first half mold and the second half mold;
Figs. 2 and 3 are respectively a longitudinally sectional view and a cross-sectional view for explaining a state where the transfer foil is heated by the heating device and the molding molded in the preceding cycle is held by the removal device of the heating and removing means;
Fig. 4 is a longitudinally sectional view showing an injection molding state after mold clamping;
Fig. 5 is a longitudinally sectional view showing a state just after mold opening;
Fig. 6 is a plan view of one embodiment of the clamp means while the mold is released from clamping;
Figs. 7 and 8 are respectively a plan view and a front view showing the clamp means shown in Fig. 6 in mold clamping and mold being released from clamping; and
Fig. 9 is a front view showing other embodiment of the clamp means.

One embodiment of the present invention will be described with reference to the accompanying drawings.

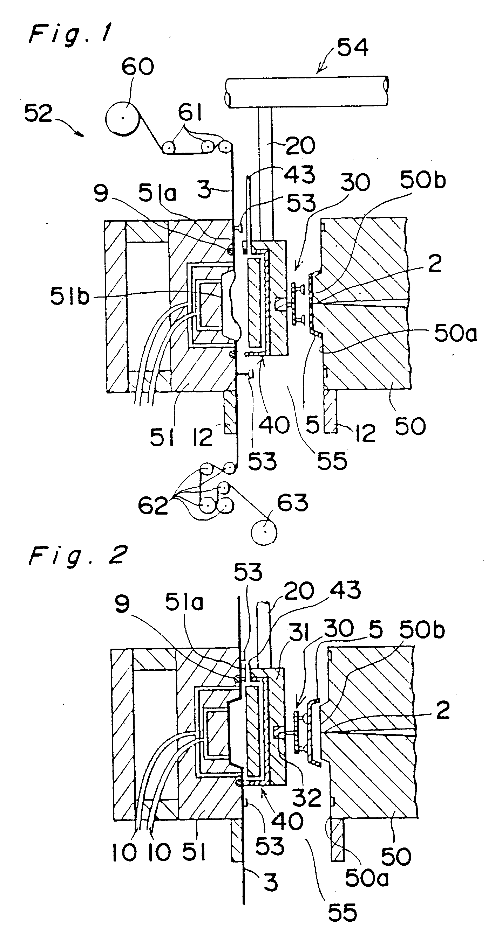

An injection molding device for manufacturing a foil decorated molding according to one embodiment of the present invention, as shown in Fig. 1, generally comprises a first half 50 of a mold (referred to as first half mold hereinafter) having an injection opening 2 confronting a first cavity-forming face 50b thereof protruded from the middle of a first parting face 50a thereof, a second half 51 of the mold (referred to as second half mold hereinafter) having a second parting face 51a thereof confronting the first parting face 50a of the first half mold 50 and arranged confronting the first half mold 50, means 52 for transporting a long transfer foil 3 having a transfer layer on a substrate film each one pitch thereof, clamp means 53 for clamping the transfer foil 3 on the second parting face 51a of the second half mold 51, and heating and removing means 54 for heating the foil 3 in mold opening and for removing a molding from the mold.

The first half mold 50 has the first cavity-forming face 50b protruding from the middle of the first parting face 50a thereof and runners penetrated through the first half mold 50 of which a distal end is opened in the first cavity-forming face 50b to form the injection opening 2.

In the second half mold 51, a second cavity-forming face 51b is formed to recess at the middle of the second parting face 51a, resulting in engaging the second cavity-forming face 51b with the first cavity-forming face 50b to form cavities therebetween in mold clamping.

The heating and removing means 54 has an arm 20 capable of entering into and removing from a space 55 formed between the first half mold 50 and the second half mold 51 in mold opening, a molding removal device 30 arranged at the end of the arm 20 at a side confronting the first parting face 50a of the first half mold 50, and a heating device 40 arranged at a side confronting the second parting face 51a of the second half mold 51.

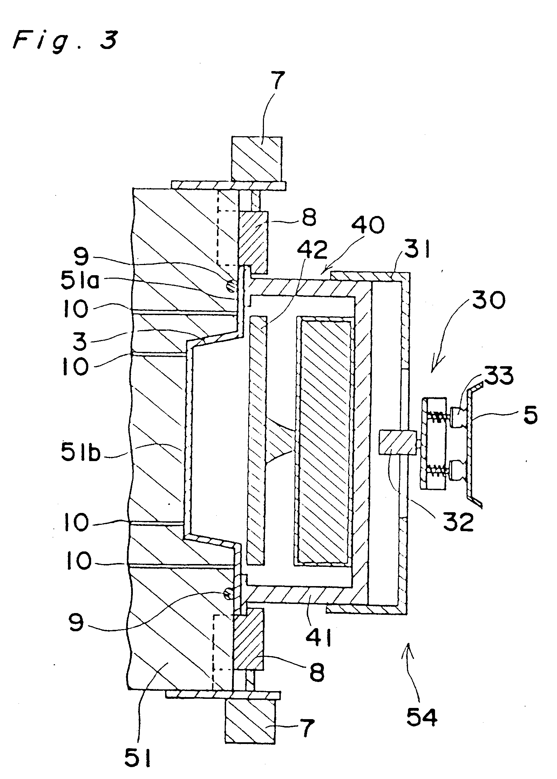

In the molding removal device 30, as shown in Figs. 2 and 3, an attachment head 31 is fixed to the end of the arm 20, and an air cylinder 32 is installed on the attachment head 31. Suction cups 33 and 33 are installed on the end of the piston rod of the air cylinder 32. Then, on the basis of driving of the air cylinder 32, the suctions 33 and 33 are moved along a horizontal direction towards the first cavity-forming face 50b of the first half mold 50 to hold the molding 5 temporarily attached to the first cavity-forming face 50b of the first half mold 50 which is molded in the preceding cycle, and are moved in the opposite direction to the above while held the molding 5 to return to an original position. As method for holding the molding 5 a chucking method may be employed in which the molding 5 is put in chucks, instead of driving the suctions 33.

The heating device 40 is generally constructed so that an outer frame 41 is fixed to the attachment head 31 fixed to the end of the arm 20, and thus a heating element 42 for heating the transfer foil 3 is provided in the outer frame 41, movement of the arm 20 in the horizontal direction causes the heating element 42 to move in a direction nearer to the second cavity-forming face 51b. In the second half mold 51, plural air cylinders 7 are installed thereon near the second parting face 51a thereof, and outer frame clamps 8 are installed on each piston rod of the air cylinder 7. Therefore, the contact of the outer frame 41 with the second parting face 51a of the second half mold 51 causes a contactless switch (not shown) to operate, and causes the air cylinders 7 to drive. Thus, each of the outer frame clamps 8 can clamp the outer frame 41 onto the second parting face 51a of the second half mold 51. An O-ring 9 is installed on the peripheral portion of the second parting face 51a around the second cavity-forming face 51b of the second half mold 51 which confronts a confronting face of the outer frame 41 which confronts the second parting face 51a. Then, the transfer foil 3 is clamped between the lower end surface of the outer frame 41 and the O-ring 9 in the second parting face 51a of the second half mold 51 as the transfer foil 3 is positioned on the second parting face 51a of the second half mold 51. As examples of the heating element 42 in the outer frame 41, extreme infrared radiation heater, cartridge heater, sheathed heater, ceramic heater, etc. can be employed.

The means 52 for transporting the transfer foil 3 is constructed so that a virgin part of the foil 3 is transported through a transport roller 60 and guide rollers 61 into the space 55 between the first half mold 50 and the second half mold 51, and a spent part of the foil 3 is wound up through guide rollers 62 by a wind-up roller 63.

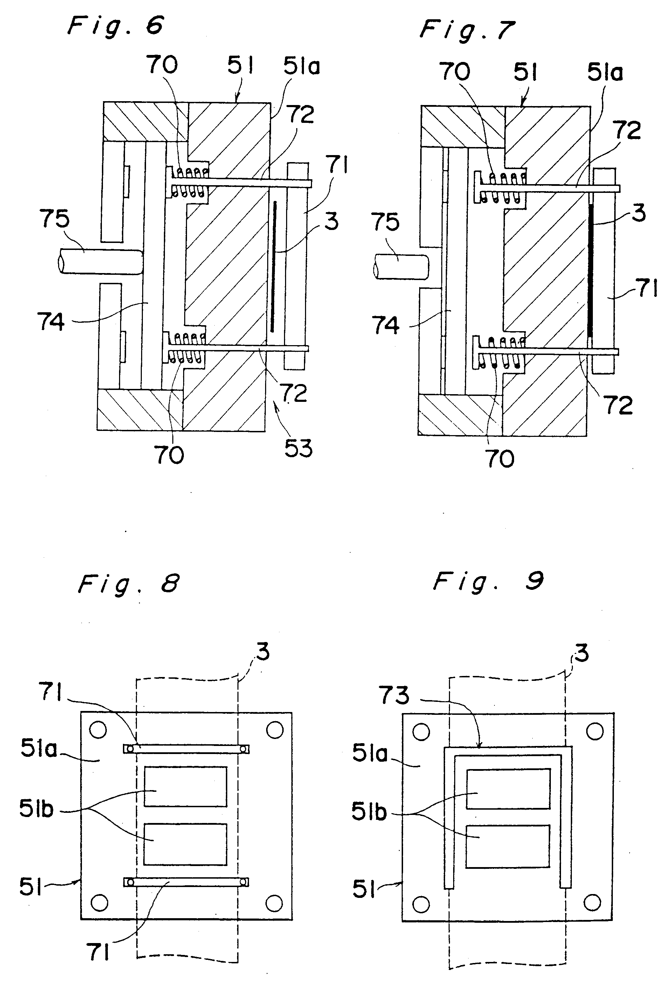

The clamp means 53 is constructed as follows: As shown in Figs. 7-9, it comprises a stick-like transfer-foil-clamp member 71 extending in a wide direction of the foil 3 which are respectively arranged at the upper and the lower of the second parting face 51a of the second half mold 51. The each end of each clamp member 71 is supported by a pin 72 each penetrating through the second half mold 51. Each pin 72 is always urged by a spring 70 in the second half mold 51 in such a direction that each clamp member 71 contacts with the second parting face 51a of the second half mold 51. Therefore, a driving plate 72 is pressed by driving of a driving rod 75, thereby the pins 72 are moved towards the first half mold 50 to separate the upper and lower clamp members 71 from the second parting face 51a. When the virgin part of the foil 3 transported by the foil transport means 52 is inserted between the pins 72 of each clamp member 71 to position at a specified position, the driving rod 75 is moved in the opposite direction to the above. Thus, by the bias force of the springs 70, each pin 72 is moved in the opposite direction to the above with each clamp member 71 so that the foil 3 is clamped onto the second parting face 51a to be held by the clamp members 71.

It is noted that a control means for controlling each of the above means, the mold, etc. and a control panel for operating the control means are not shown in the figures.

The injection molding device for manufacturing a foil decorated molding having the above construction can be functioned as follows.

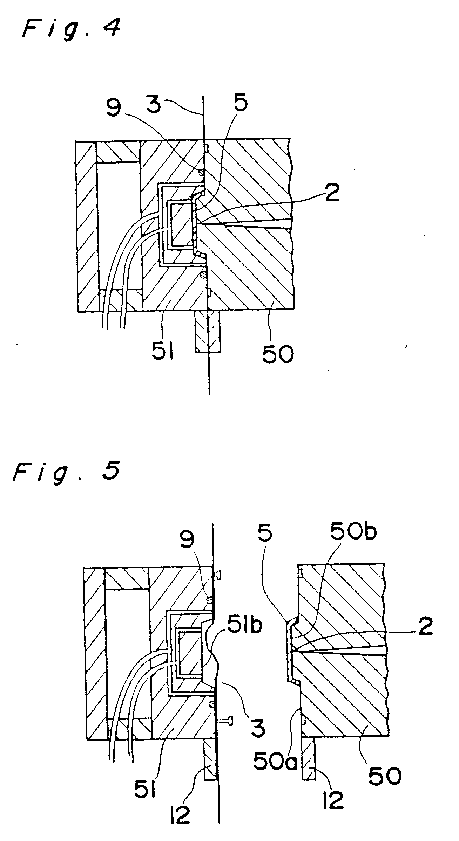

The first half mold 50 and the second half mold 51 are clamped as shown in Fig. 4 to form the cavities between both of the cavity-forming faces 50b and 51b, and the foil 3 is positioned into the cavities at the side of the second cavity-forming face 51b. In this state, molten resin is injected through the injection opening 2 into the cavities to mold a molding 5.

Then, after the molten resin is cooled and the first half mold 50 and the second half mold 51 are opened as shown in Fig. 5, the foil 3 is released from clamping by the clamp members 71, and a virgin part of the foil 3 is transported between the first half mold 50 and the second half mold 51 in a direction from upward to a position confronting the second cavity-forming face 51b by the foil transport means 52 so as to remove the spent part of the foil 3 from the position confronting the second cavity-forming face 51b. Then, a mark printed on the foil 3 is detected by a photo-sensor (not shown) integrated into the foil transport means 52 to align the virgin part of the foil 3 with the second parting face 51a of the second half mold 51 in up and down and right and left directions. Then, the foil 3 is clamped onto the second parting face 51a by the clamp members 71. At the same time, as shown in Fig. 1, the arm 20 falls to insert the heating and removing means 54 into the space 55 between the first half mold 50 and the second half mold 51 during the above operation.

After precise alignment of the foil 3 with the second parting face 51a is completed and the heating device 40 with the arm 20 is positioned at the position confronting the second cavity-forming face 51b, the arm 20 is moved in the horizontal direction towards the second half mold 51 such that the outer frame 41 of the heating device 40 contacts the second parting face 51a of the second half mold 51, as shown in Figs. 1-3. At that time, according to control of the control panel on the basis of operation of the contactless switch (not shown), as shown in Fig. 3, the air cylinders 7 arranged at the left side and the right side of the second half mold 51 are driven to clamp the outer frame 41 onto the second parting face 51a by the outer frame clamps 8. Then, the foil 3 positioned on the second parting face 51a of the second half mold 51 is clamped so that the foil 3 is caught between the confronting face of the outer frame 41 which confronts the second parting face 51a of the second half mold 51 and the O-ring 9 on the second parting face 51a of the second half mold 51. After that, the foil 3 is heated by the heating element 42.

After the removal device 30 with the arm 20 is positioned in a position confronting the first cavity-forming face 50b of the first half mold 50 at the same time as the operation, the suction cups 33 are moved in the horizontal direction towards the first cavity-forming face 50b of the first half mold 50 on the basis of driving the air cylinder 32 installed on the attachment head 31 to hold the molding 5 molded in the preceding cycle which is temporarily attached to the first cavity-forming face 50b of the first half mold 50. The suction cups 33 holding the molding 5 return to the original position in the opposite direction to the above before heating operation of the foil 3 by the heating device 40 finishes.

In the case where a mold is constructed so that the cavity-forming face is greatly recessed or protruded from the parting face, the following means can be preferably employed to align the foil 3 along the second cavity-forming face 51b of the second half mold 51 completely during heating operation of the foil 3. That is, a compressed air supply pipe 43 is installed in the heating device 40 as shown in Figs. 1 and 2, and plural vacuum holes 10 confronting the second cavity-forming face 51b of the second half mold 51 are installed in the second half mold 51. Therefore, the foil 3 is sucked through the holes 10, and simultaneously pressed by a compressed air supplied from the air supply pipe 43 to be completely aligned along the second cavity-forming face 51b of the second half mold 51. The air supply pipe 43 is connected with a pressure reducing valve, a compressor (not shown), etc. through the control panel. Each vacuum hole 10 is connected with a vacuum pump (not shown) through the control panel.

At the moment the heating operation of the foil 3 finishes, clamping of each outer frame clamp 8 is released according to instructions from the control means, and movement of the arm 20 in the horizontal direction towards the first half mold 50 causes the heating device 40 to separate from the second half mold 51. Then, the arm 20 in the heating and removing means 54 is risen and moved outside the space 55 to transport the molding 5 molded in the preceding cycle to a specified position. After the first half mold 50 and the second half mold 51 are closed and clamped at the same time as the operation, molten resin is injected from the injection opening 2 into the cavities as shown in Fig. 4 to form the molding 5 after cooling of the resin.

As shown in Fig. 5, the first half mold 50 and the second half mold 51 are opened and then the molding 5 is temporarily attached to the first cavity-forming face 50b of the first half mold 50 which has the injecting opening 2. At the same time, the substrate film of the foil 3 is removed from the transfer layer thereof and the layer is transferred onto the surface of the molding 5. The spent part of the foil 3 is transported outwardly each one pitch thereof through the transport roller 60 to be wound by the wind-up roller 63. Since the spent part of the foil 3 transporting outwardly is deformed, it is flattened by a press block 12 arranged at the lower of the first half mold 50 and the second half mold 51 so that irregularities of the foil 3 in mold clamping of the following cycle will flatten as shown in Fig. 4.

According to the injection molding device and method for manufacturing a foil decorated molding of the embodiment of the present invention, the following advantages will be obtained. That is, they are provided with the heating and removing means 54 having the removal device 30 and the heating device 40 mounted back to back in which by use of a short time and the small space in mold opening, after the molding 5 is held by the removal device 30 and the transfer foil 3 is heated by the heating device 40 on the basis of operating of the heating and removing means 54, the molding 5 can be removed therefrom outside the space 55 between the first half mold 50 and the second half mold 51 in mold clamping. Therefore, removing operation of the molding 5 and heating operation of the foil 3 can be simultaneously done, and this results in greatly improved productivity thereof, compared with the conventional techniques in which both operation be separately done.

The present invention is not limited to the embodiment described above; it can be put into practice in other various forms; for example, it can be constructed so that the second cavity-forming face 51b of the second half mold 51 is protruded therefrom and the first cavity-forming face 50b of the first half mold 50 is recessed. Instead of the arm 20, a carrier, etc. can enter into the space between the first half mold 50 and the second half mold 51 along guide rails to enter the heating and removing means 54 thereinto. Furthermore, in the means 54, the removal device 30 and the heating device 40 are not limited to be mounted back to back. Moreover, as shown in Fig. 10, as the clamp means 53, the clamp member 73 connected integrally with an extending portion of the stick-like clamp member 71 which extends downwardly from the both ends of the clamp member 71 can be employed to clamp the transfer foil 3.

## Claims

1. An injection molding device for manufacturing a foil decorated molding comprising:
a first half (50) of a mold having an injection opening (2) confronting a cavity-forming face (51b);
a second half (51) of the mold having a second parting face (51a) confronting a first parting face (50a) of said first half (50) of the mold and arranged confronting said first half (50) of the mold;
transfer foil transport means (52) for transporting a long transfer foil (3) having a transfer layer on a substrate film each one pitch thereof;
clamp means (53) for clamping the transfer foil (3) onto the second parting face (51a) of said second half (51) of the mold; and
heating and removing means (54) having a molding removal device (30), and a heating device (40) each capable of entering into and moving outside a space (55) between the first parting face (50a) of said first half (50) of the mold and the second parting face (51a) of said second half (51) of the mold (51) in mold opening, the molding removal device (30) comprising a molding holder (33) capable of comming into engagement with the molding (5) for separating it from the first half (50) of the mold and for holding it at the side of the first half (50) of the mold, and the transfer foil (3) being heated by the heating device (40) at a side of said second half (51) of the mold in a case where said means (54) is positioned in the space (55) in mold opening, while the molding (5) held by the molding holder of the removal device (30) being removed therefrom in a case where said means (54) is positioned outside the space (55) in mold clamping.

2. An injection molding method for manufacturing a foil decorated molding comprising, the steps of
transporting a long transfer foil (3) having a transfer layer on a substrate film into a space (55) between a first half (50) of a mold and a second half (51) of the mold each one pitch thereof in mold opening;
injecting molten resin into cavities in the mold in mold clamping;
opening the mold after the resin is cooled;
removing the substrate film from a foil decorated molding (5) temporarily attached to a cavity-forming face of said first half (50) of the mold to obtain the molding (5) on which the transfer layer is transferred on the surface;
moving heating and removing means (54) having a heating device (40) and a molding removal device (30) into the space (55) in mold opening;
separating the molding (5) temporarily attached to said first half (50) of the mold (50) therefrom by the removal device (30) in mold opening, and holding the molding by the removal device (30) and simultaneously heating by the heating device (40) the transfer foil (3) positioned at a side of said second half (51) of the mold in mold opening;
moving the heating and removing means (54) outside the space (55) in mold clamping; and
removing the molding (5) held by the removal device (30) therefrom in mold clamping.

## Patentansprüche

1. Spritzgußvorrichtung zur Herstellung eines foliendekorierten Artikels mit:
einer ersten Hälfte (50) einer Form mit einer Gußöffnug (2), die einer hohlraumbildenden Fläche (51b) gegenüberliegt,
einer zweiten Hälfte (51) der Form mit einer zweiten Trennfläche (51a), die einer ersten Trennfläche (50a) der ersten Hälfte (50) der Form gegenüberliegt und der ersten Hälfte (50) der Form gegenüberliegt,
einer Übertragungsfolien-Transporteinrichtung (52) zum Transportieren einer langen Übertragungsfolie (3) mit einer Übertragungsschicht mit einem Substratfilm bei jedem Versatz,
Klemmmitteln (53) zum Klemmen der Übertragungsfolie (3) auf die zweite Trennfläche (51a) der zweiten Hälfte (51) der Form und
Heiz- und Entfernmitteln (54) mit einer Artikel-Entfernungsvorrichtung (30) und einer Heizvorrichtung (40), die jeweils beim Öffnen der Form in einen Raum (55) zwischen der ersten Trennfläche (50a) der ersten Hälfte (50) der Form und der zweiten Trennfläche (51a) der zweiten Hälfte (51) der Form bewegt bzw. daraus herausbewegt werden können, wobei die Artikel-Entfernungsvorrichtung (30) einen Artikelhalter (33) aufweist, der in Eingriff mit dem Artikel (5) kommen kann, um ihn aus der ersten Hälfte (50) der Form zu entfernen und ihn an der Seite der ersten Hälfte (50) der Form zu halten, wobei die Übertragungsfolie (3) durch die Heizvorrichtung (40) auf der Seite der zweiten Hälfte (51) der Form in dem Fall geheizt wird, wenn die Einrichtung (54) in dem Raum (55) beim Formöffnen positioniert ist, während der von dem Artikelhalter der Entfernungsvorrichtung (30) gehaltene Artikel (5) daraus in dem Fall entfernt wird, wenn die Einrichtung (54) außerhalb des Raumes (55) beim Formschließen positioniert wird.

2. Spritzgußverfahren zur Herstellung eines foliendekorierten Artikels mit den Schritten
Transportieren einer langen Übertragungsfolie (3) mit einer Übertragungsschicht auf einem Substratfilm in einen Raum (55) zwischen einer ersten Hälfte (50) einer Form und einer zweiten Hälfte (51) der Form um einen Versatz beim Formöffnen,
Einbringen geschmolzenen Harzes in Hohlräume in der Form beim Formschließen,
Öffnen der Form, nachdem das Harz abgekühlt ist,
Entfernen des Substratfilms von einem foliendekorierten Artikel (5), der zeitweilig an einer hohlraumbildenden Fläche der ersten Hälfte (50) der Form anhaftet, um den Artikel (5), auf dem die Übertragungsschicht auf die Oberfläche übertragen ist, zu erhalten,
Bewegen von Heiz- und Entfernungsmittel (54) mit einer Heizvorrichtung (40) und einer Artikelentfernungsvorrichtung (30) in den Raum (55) beim Formöffnen,
Trennen des Artikels (5), der zeitweilig an der ersten Hälfte (50) der Form (50) anhaftet, durch die Entfernungsvorrichtung (30) beim Formöffnen, und Halten des Artikels durch die Entfernungsvorrichtung (30) und gleichzeitiges Heizen der Übertragungsfolie (3), die an einer Seite der zweiten Hälfte (51) der Form angeordnet ist, durch die Heizvorrichtung (40) beim Formöffnen,
Bewegen der Heiz- und Entfernungsmittel (54) außerhalb des Raumes (55) beim Formschließen und
Entfernen des Artikels (5), der von der Entfernungsvorrichtung (30) gehalten wird, beim Formschließen.

## Revendications

1. Dispositif de moulage par injection pour la fabrication d'un moulage décoré d'une feuille comportant :
une première moitié (50) d'un moule possédant un orifice d'injection (2) en vis-à-vis d'une face formant une cavité (51b);
une seconde moitié (51) de moule possédant une seconde face de séparation (51a) a vis-à-vis d'une première face de séparation (50a) de ladite première moitié (50) du moule et agencée en vis-à-vis de ladite première moitié (50) du moule;
des moyens de transport de feuille de transfert (52) pour transporter une feuille de transfert allongée (3) possédant une couche de transfert sur une pellicule de substrat selon chaque pas de celle-ci;
des moyens de serrage (53) pour serrer la feuille de transfert (3) sur la seconde face de séparation (51a) de ladite seconde moitié (51) du moule; et
des moyens d'enlèvement et de chauffage (54) possédant un dispositif d'enlèvement de moulage (30), et un moyen de chauffage (40) chacun capable de pénétrer dans et de sortir d'un espace (55) entre la première face de séparation (50a) de ladite première moitié (50) du moule et la seconde face de séparation (51a) de ladite seconde moitié (51) du moule (51) lors de l'ouverture du moule, le dispositif d'enlèvement de moulage (30) comprenant un support de moulage (33) capable de venir en contact avec le moulage (5) pour le séparer de la première moitié (50) du moule et pour le maintenir sur le côté de la première moitié (50) du moule, et la feuille de transfert (3) étant chauffée par le dispositif de chauffage (40) sur le côté de ladite seconde moitié (51) du moule dans le cas où lesdits moyens (54) sont positionnés dans l'espace (55) lors de l'ouverture du moule, tandis que le moulage (5) maintenu par le support de moulage du dispositif d'enlèvement (30) est retiré de celui-ci dans le cas où lesdits moyens (54) sont positionnés à l'extérieur de l'espace (55) lors de la fermeture du moule.

2. Procédé de moulage par injection pour la fabrication d'un moulage décoré d'une feuille comportant les étapes consistant à :
transporter une feuille de transfert (3) allongée, possédant une couche de transfert sur une pellicule de substrat dans un espace (55) entre une première moitié (50) d'un moule et une seconde moitié (51) de moule selon chaque pas de celle-ci lors de l'ouverture du moule;
injecter de la résine fondue dans les cavités du moule lors de la fermeture du moule;
ouvrir le moule après refroidissement de la résine;
enlever la pellicule de substrat du moulage décoré sous forme de feuille (5) temporairement fixée au côté en forme de cavité de ladite première moitié (50) du moule pour obtenir le moulage (5) sur la surface duquel la couche de transfert est transférée;
déplacer des moyens de chauffage et d'enlèvement (54) possédant un dispositif de chauffage (40) et un dispositif d'enlèvement de moulage (30) dans l'espace (55) lors de l'ouverture du moule;
séparer le moulage (5) temporairement attaché à ladite première moitié (50) du moule (50) de celui-ci grâce au dispositif d'enlèvement (30) lors de l'ouverture du moule, et maintenir le moulage grâce au dispositif d'enlèvement (30) et chauffer simultanément grâce au dispositif de chauffage (40) la feuille de transfert (3) positionnée sur un côté de ladite seconde moitié (51) du moule lors de l'ouverture du moule;
déplacer les moyens de chauffage et d'enlèvement (54) à l'extérieur de l'espace (55) lors de la fermeture du moule; et
enlever le moulage (5) maintenu par le dispositif d'enlèvement (30) de celui-ci lors de la fermeture du moule.
